# EUROPÄISCHE PATENTSCHRIFT

(11) **EP 1 464 599 B1**
(45) Veröffentlichungstag und Bekanntmachung des Hinweises auf die Patenterteilung: **31.08.2005**
(21) Anmeldenummer: 04007940.2
(22) Anmeldetag: 01.04.2004
(51) Int. Cl.: B65G 69/28

(54) **Ladebrücke mit höhenanpassbarem Vorschub**
Loading ramp with height conforming bearing section
Rampe de chargement avec profilé porteur adaptable à la hauteur

(30) Priorität: 02.04.2003 DE 20305320 U; 30.06.2003 DE 10329294
(43) Veröffentlichungstag der Anmeldung: 06.10.2004
(73) Patentinhaber: ALTEN GERÄTEBAU GMBH, D-30974 Wennigsen (DE)
(72) Erfinder: Hofmann, Gerhard, 31832 Springe (DE); Mayer, Heinz-Gerd, 30952 Ronnenberg (DE); Borchardt, Horst, 30974 Wennigsen (DE); Turbanisch, Reiner, 31535 Neustadt (DE)
(74) Vertreter: Eisenführ, Speiser & Partner

(56) Entgegenhaltungen:
- DE-A- 10 329 294
- US-A- 4 662 021

## Beschreibung

Die vorliegende Erfindung betrifft eine Ladebrücke für Rampen mit einem am rampenseitigen Ende um eine horizontale Achse an der Rampe schwenkbar lagerbaren Plateau mit einer Deckplatte und mit einem am freien Ende des Plateaus angeordneten ausfahrbaren Vorschub mit einer Deckfläche, dessen freies Ende auf eine zu be- bzw. entladende Plattform aufgelegt werden kann, wobei der Vorschub in eingefahrenem Zustand wenigstens teilweise unter der Deckplatte des Plateaus angeordnet ist.

Ladebrücken dieser Art sind beispielsweise in den deutschen Gebrauchsmustern DE 202 10 290 U1 und DE 202 10 291 U1 als auch in der US-A-4 662 021 beschrieben, wobei dort Einzelheiten des Vorschubs nicht im Detail erläutert sind. Vielmehr ist dort nur von einem separaten Auflageteil die Rede, das verschiebbar oder verschwenkbar an einer Brückenplatte (vorliegend als Plateau bezeichnet) angeordnet ist und das häufig auch als Verlängerung der Brückenplatte bezeichnet wird. Ein solches Auflageteil stellt somit den vorderen Abschnitt des Vorschubs dar und dient zum Auflegen auf eine zu be- bzw. entlandende Plattform, z.B. die Ladefläche eines an die Rampe rückwärts andockenden Lastkraftwagens, so dass Waren über die Ladebrücke verladen werden können. Dabei wird die Ladebrücke von Flurfördergeräten, wie beispielsweise Gabelstaplern oder Hubwagen, überfahren, weshalb die Ladebrücke für eine hohe Gewichtsbelastung von bis zu mehreren Tonnen ausgelegt sein muss.

Um das Rückwärtsheranfahren eines Lastkraftwagens an die Rampe zu erleichtern und insbesondere zu vermeiden, dass zwischen Hinterkante des Lastkraftwagens und Vorderkante der Rampe ein bestimmter Abstand eingehalten werden muss, kann der Vorschub der Ladebrücke ein- und ausgefahren werden, um somit die abstandsvariable Lücke zwischen Hinterkante des Lastkraftwagens und Vorderkante der Rampe zu überbrücken. Dabei gleitet der Vorschub unterhalb einer Deckplatte des Plateaus hervor, was unmittelbar dazu führt, dass an der Vorderkante der Deckplatte des Plateaus, also im Übergangsbereich zur Deckfläche des Vorschubs, eine kleine Stufe entsteht, da die Deckplatte des Plateaus aufgrund der hohen Belastung eine gewisse Mindeststärke aufweisen muss. Diese Stufe führt bei der Überfahrt mit Verladegeräten zu Erschütterungen und Geräuschen. Insbesondere bei sogenannten Fahrerstehfahrzeugen, wie beispielsweise Gabelstaplern oder ähnlichen Fahrzeugen, auf denen der Fahrzeugführer stehend mitfährt, führen diese Erschütterungen zu Stößen auf das Rückgrat des Fahrzeugführers, was bei regelmäßiger Aussetzung mit derartigen Belastungen zu gesundheitlichen Problemen führen kann.

Der vorliegenden Erfindung liegt deshalb die Aufgabe zugrunde, die bekannte Ladebrücke derart zu verbessern, dass im Übergangsbereich zwischen Deckplatte des Plateaus und Deckfläche des Vorschubs ein möglichst weicher Übergang, also mit möglichst kleiner oder gar keiner Stufe, vorhanden ist, um dort Erschütterungen und Geräusche beim Verladen mit Verladegeräten möglichst zu vermeiden. Weiter sollen möglichst auch an anderen Übergangsstellen weiche Übergänge geschaffen werden.

Diese Aufgabe wird erfindungsgemäß dadurch gelöst, dass Mittel vorgesehen sind zur Angleichung des Höhenniveaus der Deckfläche des Vorschubs und der Deckplatte des Plateaus, wenn der Vorschub in eine Endposition ausgefahren ist, und zum anschließenden Einfahren des Vorschubs um eine vorbestimmte Strecke in eine Ladeposition und dass die dem Vorschub zuweisende Vorderkante der Deckplatte des Plateaus und die dem Plateau zuweisende Hinterkante der Deckfläche des Vorschubs zueinander komplementär abgeschrägt sind, so dass die Deckfläche des Vorschubs und die Deckplatte des Plateaus in der Ladeposition eine im wesentlichen stufenlose Ladefläche bilden.

Der Erfindung liegt dabei die Erkenntnis zugrunde, dass zumindest in einer Ladeposition, bei der der Vorschub nahezu vollständig ausgefahren ist, ein weicher Übergang erreicht werden kann, wenn nach dem Ausfahren des Vorschubs ein Höhenausgleich zwischen Vorschub und Plateau erfolgt, so dass die Oberseiten der Deckfläche des Vorschubs und der Deckplatte des Plateaus auf gleichem Höhenniveau sind. Um auch bei nicht voll ausgefahrenem Vorschub einen möglichst weichen Übergang zu schaffen, ist die dem Vorschub zuweisende Vorderkante der Deckplatte des Plateaus abgeschrägt. Eine entsprechend komplementäre Abschrägung weist die dem Plateau zuweisende Hinterkante der Deckfläche des Vorschubs auf.

Eine alleinige Höhenangleichung in voll ausgefahrenem Zustand des Vorschubs, also in der Endposition, würde allerdings dazu führen, dass im Übergangsbereich ein Spalt entsteht. Um dies zu vermeiden, ist deshalb weiter erfindungsgemäß vorgesehen, dass nach dem Ausfahren des Vorschubs und der Höhenangleichung der Vorschub wieder um ein bestimmtes Stück eingefahren wird, bis die beiden abgeschrägten Kanten deckend übereinander liegen und der genannte Spalt geschlossen ist. Dadurch wird ein äußerst weicher Übergang zwischen Vorschub und Plateau erreicht, der nahezu keine Stufe mehr aufweist, wodurch die eingangs genannten Erschütterungen und Geräusche an dieser Stelle vermieden werden.

Vorteilhafte Ausgestaltungen der erfindungsgemäßen Ladebrücke sind in den Unteransprüchen angegeben. So können die Mittel zur Höhenniveauangleichung entweder so ausgestaltet sein, dass in der Endposition des Vorschubs der Vorschub selbst angehoben wird oder dass stattdessen oder auch gleichzeitig eine Absenkung des Plateaus erfolgt. Bevorzugt wird die erstgenannte Möglichkeit eingesetzt, wobei die Anhebung des Vorschubs dadurch unterstützt oder allein bewirkt werden kann, dass das freie Ende des Vorschubs (das sogenannte Auflageteil) auf der zu be- bzw. entladenden Plattform aufliegt und dass der Vorschub so an dem Plateau angebracht ist, dass der Vorschub bei Absenkung der Ladebrücke und Auflegen des Auflageteils des Vorschubs auf der Plattform der Vorschub in der Höhe gegenüber dem Plateau bewegbar ist, bis beispielsweise ein Anschlag erreicht wird, welcher ein Erreichen der Höhenniveauangleichung vermittelt.

Ein Absenken des Plateaus relativ zum Vorschub kann auch erfolgen, indem der ausgefahrene Vorschub auf die Ladefläche eines Lkws aufliegt und das Plateau aufgrund seines Eigengewichtes und eines in dieser Betriebssituation nicht vorhandenen hydraulischen Gegendrucks in Hubzylindern so weit absinkt, bis ein mechanischer Widerstand vorhanden ist. Dies ist in der Regel nach einigen Millimetern der Fall, wenn nämlich das Plateau sich auf den abgesetzten Teil des Vorschubs auflegt und sich somit die Oberflächen von Vorschub und Plateau auf gleicher Höhe befinden.

Verschiedene Ausgestaltungen dieser Mittel sind in den Ansprüchen 4 und 5 angegeben. Demnach können einerseits hydraulische Mittel, beispielsweise ein Hub- und ein Vorschub-Hydraulikzylinder eingesetzt werden. Denkbar ist jedoch auch der Einsatz mechanischer Mittel, wie beispielsweise der Einsatz von Führungsrollen oder Führungsschienen, die die Bewegungsrichtung des Vorschubes beim Ausfahren vorgeben.

Gemäß einer weiteren vorteilhaften Ausgestaltung ist vorgesehen, dass die Vorderkante der Deckplatte des Plateaus und die Hinterkante der Deckfläche des Vorschubs einen Winkel im Bereich von etwa 10° bis 20°, insbesondere von etwa 10°, aufweisen. Dadurch kann ein besonders guter Übergang zwischen Plateau und Vorschub erreicht werden, ohne dass die Belastbarkeit eingeschränkt ist.

Ladebrücken der beschriebenen Art ermöglichen die Anpassung an unterschiedlich hohe Plattformen. Bei einem gefederten Fahrzeug ändert sich die Höhe der Plattform während des Überladebetriebes in Folge der Gewichtsänderungen. Das Auflageteil der Ladebrücke verändert dabei seinen Winkel zur Plattform, wobei eine Stufe zwischen Plattform und vorderem Ende der Ladebrücke, also dem freien Ende des Auflageteils, eine noch ungünstigere Ausbildung erhalten kann. Um somit einen besseren Übergang zwischen der zu be- bzw. entladenden Plattform des Lkw oder dergleichen und der Ladebrücke zu schaffen, wird deshalb in einer weiteren Ausbildung vorgeschlagen, dass die Kante des freien Endes einen Belag aus einem elastischen Material aufweist. Die Ladebrücke liegt somit mit einer elastischen, dämpfenden Schicht auf der zu be- oder entladenden Plattform auf, wodurch Erschütterungen und Geräusche beim Überfahren gedämpft werden. Zudem ist eine Anpassung an Unregelmäßigkeiten der Plattform möglich.

Nach einer vorteilhaften Ausführungsform geht der elastische Belag in eine Lippe über, die sich vor der Kante der Ladebrücke befindet. Durch diese elastische Lippe kann eine noch bessere Verbindung zu der be- bzw. entladenden Plattform hergestellt werden. Die oben erwähnte Stufe kann minimiert werden. Zudem ist zumindest in einem gewissen Rahmen eine Anpassung an eine schief in Bezug auf die Längsachse der Ladebrücke stehende Plattform (z.B. bei einem einseitig beladenen Wagen) möglich.

Der elastische Belag kann zusammen mit der Lippe durch ein Profilelement gebildet sein, das auf beliebige Weise, z.B. durch bekannte Haftverfahren oder durch Formschluss mit der Ladebrücke, verbunden ist.

Der elastische Belag kann z.B. aus Gummi, Polyurethan (PU) oder einem ähnlichen Werkstoff bestehen. Wichtig ist, dass der Werkstoff einerseits die geforderten elastischen Eigenschaften aufweist und andererseits den Belastungen im Verladebetrieb standhalten kann.

Bei Ladebrücken der beschriebenen Art benötigt ferner die Gelenkstelle zur Lagerung der Ladebrücke bzw. des Plateaus an der Rampe immer einen gewissen Raum. Zwischen der Verkehrsfläche auf der Rampe und der Verkehrsfläche (Deckplatte des Plateaus und ggf. Deckfläche des Vorschubs) auf der Ladebrücke befindet sich daher bei herkömmlichen Ladebrücken ein Spalt, der bei der Überfahrt ebenfalls Erschütterungen und Geräusche hervorruft. Um auch an dieser Gelenkstelle einen besseren Übergang zwischen der zu be- bzw. entladenden Plattform und der Ladebrücke zu schaffen, ist in einer weiteren Ausgestaltung vorgesehen, dass zur schwenkbaren Lagerung des Plateaus an der Rampe eine mit dem Plateau verbundene Schwenkachse vorgesehen ist, die in einer an der Rampe angeordneten Lagerschale gelagert ist, wobei die Lagerschale nur einen Teil des Umfangs der Schwenkachse umschließt in der Weise, dass die Schwenkachse auf einem Umfangsabschnitt, der oben und auf der der Rampe abgewandten Seite liegt, von der Lagerschale frei ist, und wobei die Deckplatte des Plateaus in einer zu der Schwenkachse tangentialen Ebene liegt.

Somit bildet das Gelenk selbst einen Teil der Verkehrsfläche, so dass der Spalt geschlossen ist. Um einen noch besseren Übergang herzustellen, befindet sich die nach oben weisende Außenfläche der Lagerschale vorzugsweise auf der gleichen Höhe wie die Verkehrsfläche der Rampe.

Vorzugsweise besteht die Lagerschale aus einem elastischen Werkstoff wie Kunststoff. Das Lager ist dann geeignet, Erschütterungen und Stöße zu dämpfen und eine Übertragung der Schwingungen zwischen der Rampe und dem Gebäude zu verhindern bzw. stark abzumildern (Schwingungstrennung).

Es sei schließlich noch darauf hingewiesen, dass diese Ausgestaltung sowohl bei Ladebrücken mit einer Gelenkstelle anwendbar ist, bei der sich Schwenkachse und/oder Lagerschale durchgehend und praktisch über die gesamte Breite der Ladebrücke erstrecken, als auch bei Ladebrücken, bei denen die Schwenkachse und/oder Lagerschale, über die Breite der Deckplatte gesehen, unterbrochen sind bzw. die Gelenkstelle durch mehrere, zueinander fluchtende Gelenke gebildet ist, wobei die hier zuerst genannte Ausführung in den meisten Fällen vorzuziehen sein wird.

Des weiteren sei darauf hingewiesen, dass die obigen Ausgestaltungen sowohl einzeln als auch in Kombination miteinander eingesetzt werden können.

Die Erfindung soll nachfolgend anhand der Zeichnungen näher erläutert werden. Es zeigen:
- Figur 1: eine Seitenansicht einer bekannten Brückenplatte,
- Figur 2: eine Seitenansicht einer erfindungsgemäßen Brückenplatte in verschiedenen Stellungen,
- Figur 3: weitere Ausführungsformen von Mitteln zur Höhenniveauangleichung,
- Figur 4: eine weitere Ausgestaltung einer erfindungsgemäßen Brückenplatte in Seitenansicht,
- Figuren 5 und 6: den vorderen Abschnitt einer Ladebrücke herkömmlicher Bauweise in unterschiedlichen Stellungen,
- Figuren 7 und 8: den vorderen Abschnitt einer Ladebrücke gemäß einer weiteren bevorzugten Ausgestaltung in unterschiedlichen Stellungen,
- Figur 9: einen Querschnitt durch einen Teil einer Ladebrücke herkömmlicher Bauart und
- Figur 10: einen Querschnitt durch einen Teil einer Ladebrücke gemäß einer weiteren bevorzugten Ausgestaltung der Erfindung.

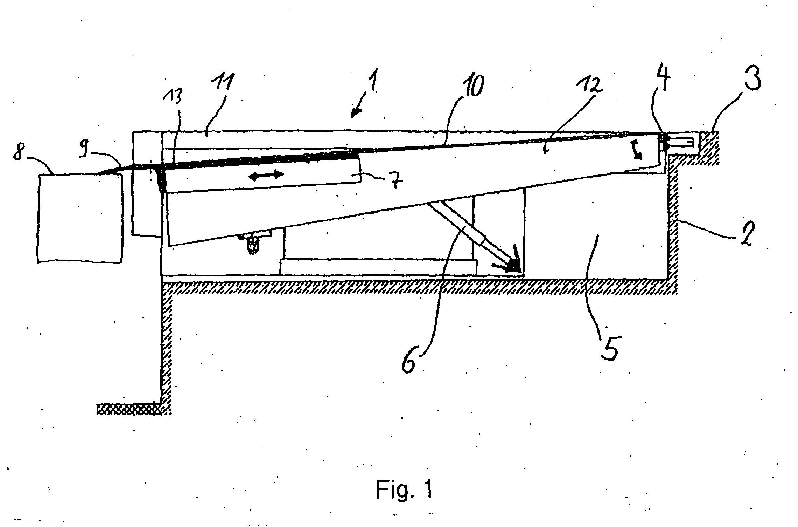

Eine bekannte Ladebrücke ist in Seitenansicht in der Figur 1 gezeigt. Die Ladebrücke 1 ist mittels eines Rahmens 11 an einer Rampe 2 mit Verkehrsfläche 3 angeordnet und mittels einer geeigneten Lagerung um eine horizontale Achse 4 verschwenkbar gelagert. Die Rampe 2 kann beispielsweise in oder vor der Öffnung eines Gebäudes, etwa einer Lagerhalle, angeordnet sein. Die Ladebrücke 1 ist bevorzugt innerhalb einer Ausnehmung 5 der Rampe 2 angeordnet, in die die Ladebrücke 1 abgesenkt werden kann. Zur Verschwenkung dient dabei ein Hydraulikzylinder 6.

Die Ladebrücke 1 selbst weist im wesentlichen ein Plateau 12 mit einer Deckplatte 10 und einen innerhalb des Plateaus 12 verfahrbaren Vorschub 7 mit einer Deckfläche 13 und einem am vorderen Ende angebrachten Auflageteil 9 auf. Mittels des Auflageteils 9 kann die Ladebrücke 1 auf einer Plattform 8 eines Fahrzeugs, das beladen oder entladen werden soll, aufgelegt werden. Infolge ihrer Verschwenkbarkeit um die horizontale Achse 4 kann die Ladebrücke 1 an unterschiedlich hohe Plattformen 8 angepasst werden und auch der Höhe der Plattform 8 folgen, z.B. bei einem Fahrzeug, dessen Federung beim Beladen infolge zunehmenden Gewichts nachgibt. Aufgrund des aus- und einfahrbaren Vorschubs 7 ist es des weiteren nicht erforderlich, dass das Fahrzeug einen genau definierten Abstand zur Vorderkante der Rampe 2 einhält, sondern der Abstand muss nur innerhalb eines bestimmten Bereichs liegen, der von dem Vorschub 7 überbrückt werden kann.

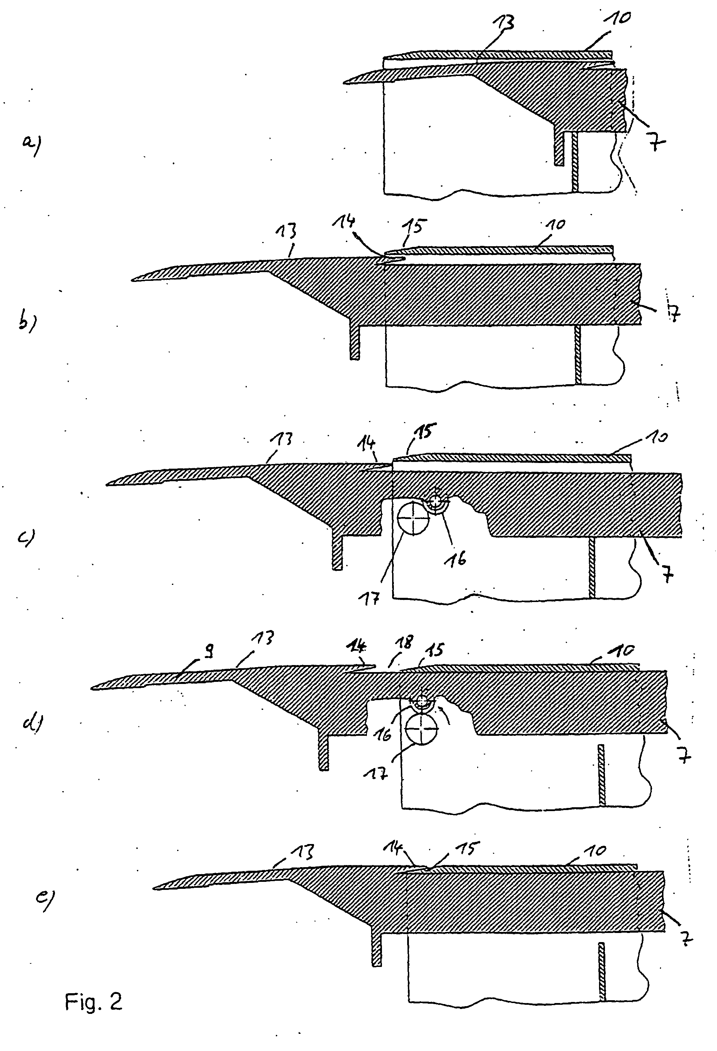

Figur 2 zeigt eine erste Ausführungsform einer erfindungsgemäßen Ladebrücke in verschiedenen Stellungen. In der in Figur 2a gezeigten Ruhestellung befindet sich der Vorschub 7 innerhalb des Plateaus, d.h. die Deckfläche 13 des Vorschubs 7 ist unmittelbar unterhalb der Deckplatte 10 des Plateaus angeordnet. In einer in Figur 2b gezeigten Zwischenstellung, in der auch ein Verladevorgang möglich ist, ist der Vorschub 7 noch nicht ganz ausgefahren, so dass die dem Plateau bzw. der Deckplatte 10 des Plateaus zuweisende Hinterkante 14 der Deckfläche 13 des Vorschubs 7 noch unterhalb der Vorderkante 15 der Deckplatte 10 liegt. Zwar ist die Vorderkante 15 der Deckplatte 10 zum freien Ende hin abgeschrägt; aufgrund einer gewissen Mindeststärke der Deckplatte 10 auch an dieser Stelle lässt sich jedoch eine Stufe im Übergangsbereich von der Deckfläche 13 des Vorschubs 7 zur Deckplatte 10 des Plateaus nicht vermeiden. Dies kann somit beim Verladevorgang zu den eingangs genannten Erschütterungen und Geräuschen führen.

Figur 2c zeigt eine Stellung kurz vor Erreichen des maximalen Ausfahrens des Vorschubs 7, die als Endposition bezeichnet werden soll. In dieser Stellung erreicht der Vorschub 7 gerade eine Position, in der die Hinterkante 14 der Deckfläche 13 gerade nicht mehr unterhalb der Vorderkante 15 der Deckplatte 10 liegt. Um nun die erfindungsgemäß vorgesehene Höhenangleichung zwischen Oberseite der Deckplatte 10 und der Deckfläche 13 zu erreichen, ist an dem Vorschub 7 eine (oder mehrere) Rolle(n) 16 angeordnet, die in dieser Position auf eine seitlich am Plateau angebrachte Führung 17 trifft und über diese nach oben hin abrollt. Dadurch wird der Vorschub 7 weiter ausgefahren, aber gleichzeitig auch nach oben bewegt und in die in Figur 2d gezeigte Position gebracht. Die erfindungsgemäß vorgesehene Höhenangleichung, und zwar die in Figur 2d gezeigte Position, kann auch ohne Anordnung einer (oder mehrerer) Rolle(n) 16 und ohne angebrachte Führung 17 dadurch erreicht werden, dass das Auflageteil 9 auf die Plattform 8 des Fahrzeugs aufgelegt wird und sich das Plateau aufgrund des Eigengewichts abgesenkt.

Würde jedoch der Vorschub 7 nun in dieser Position verbleiben, würde der zwischen Hinterkante 14 und Vorderkante 15 verbleibende Spalt 18 zu enormen Erschütterungen und Geräuschen beim Überfahren mit Flurfördergeräten führen. Deshalb wird anschließend der Vorschub 7 noch soweit wieder eingefahren, bis die in Figur 2e gezeigte Ladeposition erreicht ist, bei der die abgeschrägte Vorderkante 15 unmittelbar an der ebenfalls (komplementär) abgeschrägten Hinterkante 14 anliegt, so dass der Spalt 18 geschlossen ist und sich eine nahezu glatte Ladefläche ohne Stufen und Spalten ergibt.

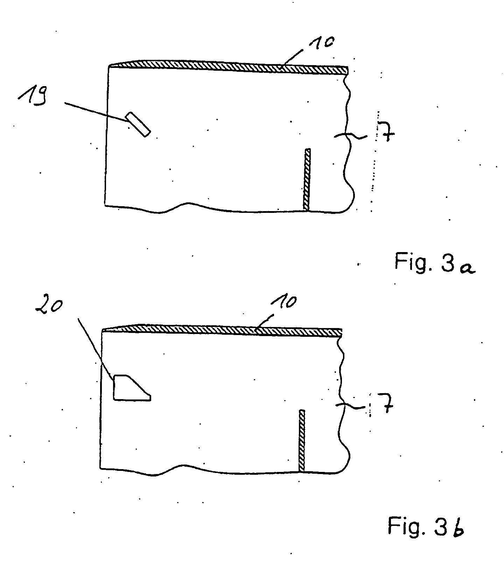

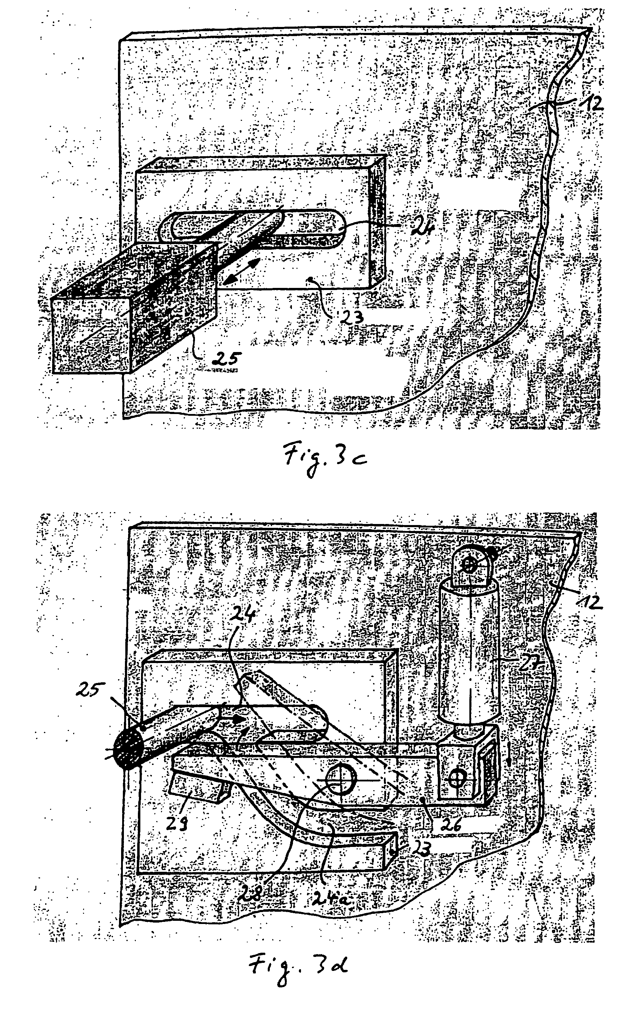

Alternativ zu der in Figur 2 gezeigten Führung 17, die beispielsweise ein Rundstahl sein kann, über den die Rolle(n) 16 abrollt, kann auch eine schräg angeordnete gerade oder gekrümmte Führungsschiene 19 oder 20, wie sie in den Figuren 3a und 3b angedeutet sind, verwendet werden. Diese können beispielsweise durch einen einfachen Flachstahl, der entsprechend bearbeitet ist, verwirklicht werden. Natürlich sind auch weitere alternative und äquivalente Mittel zu der in Figur 2 gezeigten Führungsrolle 16 und Führungsstange 17 einsetzbar.

Um zu verhindern, dass beim Einfahren des Vorschubs 7 aus der in Figur 2d gezeigten Position in die in Figur 2e gezeigte Ladeposition der Vorschub wieder absinkt, können bevorzugt weitere mechanische Mittel vorgesehen sein, wie sie in den Figuren 3c und 3d beispielhaft gezeigt sind. Bei der in Figur 3c gezeigten Ausgestaltung ist an dem Plateau 12 seitlich eine Kulisse 23 mit einem in Vorschubrichtung ausgestalteten Langloch 24 angebracht. Weiter ist unterhalb des Vorschubs ein quer zur Vorschubrichtung verschiebbarer Bolzen 25 am Vorschub angeordnet. Dieser Bolzen 25 ist normalerweise in einer Position, in der er nicht in das Langloch 24 eingreift. Erst wenn der Vorschub, wie in Figur 2d gezeigt, vollständig ausgefahren und die Höhenangleichung zwischen Vorschub und Plateau erfolgt ist, wird der Bolzen 25 in das Langloch 24 der Kulisse 23 eingeschoben. Dadurch wird beim Zurückfahren des Vorschubs (siehe Figur 2e) eine erneute Absenkbewegung des Vorschubs verhindert. Die Bewegung des Bolzen 25 kann dabei entweder mechanisch, hydraulisch oder elektromechanisch erfolgen. Ferner können ein oder mehrere solche Ausgestaltungen an der Ladebrücke angebracht sein.

Eine weitere Ausgestaltung zeigt Figur 3d. Dabei ist ebenfalls an dem Plateau 12 seitlich eine Kulisse 23 angeordnet. Das in der Kulisse 23 vorgesehene Langloch 24 weist jedoch bei dieser Ausgestaltung auch eine nach unten gekrümmte und offene Führungsbahn 24a auf. Unterhalb des Vorschubs ist wiederum an diesem ein Bolzen 25 angeordnet, der jedoch immer in das Langloch 24 bzw. die Führungsbahn 24a eingreift, also nicht quer zur Vorschubrichtung beweglich ist. Mittels einer Weiche 26, die in der gezeigten Ausgestaltung von einem Hydraulikzylinder 27 um einen Drehpunkt 28 herum gedreht und somit in zwei verschiedene Stellungen gebracht werden kann, kann eine Umschaltung zwischen zwei Modi erfolgen. In einem ersten Modus (strichpunktiert gezeichnet) ist die Weiche 26 so gestellt, dass der Bolzen 25 in der Führungsbahn 24a gleiten kann, also ein Anheben bzw. Absenken des Vorschubs in Bezug auf das Plateau 12 zulässt. In einem zweiten Modus (durchgezogen gezeichnet) liegt die Weiche 26 auf einem Anschlag 29 auf und verhindert, dass der Bolzen 25 in der Führungsbahn 24a gleiten kann. Der Bolzen 25 kann dann also nur in dem Langloch 24 gleiten und verhindert ein Absenken des Vorschubs. Die Weiche wird in diese zweite Position gebracht, wenn der Vorschub 7 in der in Figur 2d gezeigten Position angelangt ist und bevor er in die in Figur 2e gezeigte Ladeposition gebracht wird.

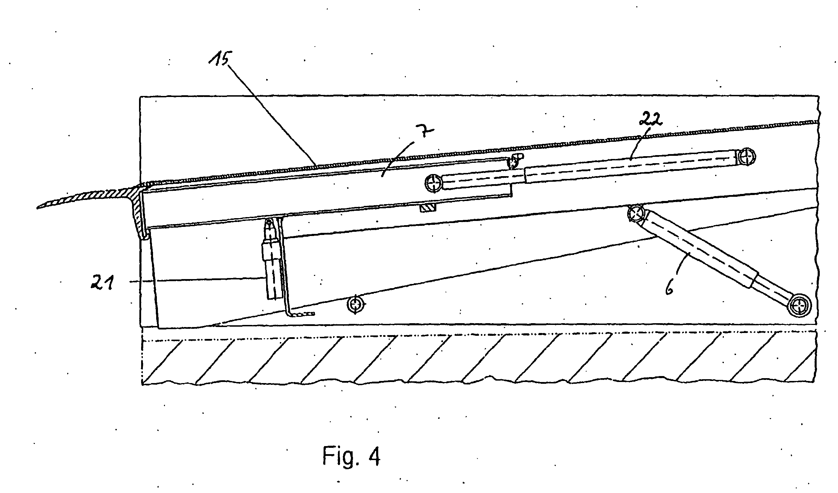

Darüber hinaus können nicht nur mechanische Mittel eingesetzt werden, sondern es können auch insbesondere hydraulische Mittel, wie beispielsweise ein in Figur 4 gezeigter Hubzylinder 21 und ein Vorschubzylinder 22, der auch bei der in Figur 2 gezeigten Ausgestaltung zum Ein- und Ausfahren des Vorschubs vorgesehen ist, eingesetzt werden. Bei dieser Ausgestaltung können grundsätzlich seitliche Führungen, wie beispielsweise in den Figuren 3c und 3d gezeigt, oder Hubmechaniken entfallen. Die in Figur 4 gezeigte Ausgestaltung stellt somit eine einfache und praxisnahe Lösung dar. Zum Einfahren des Vorschubs 7 aus der in Figur 2e gezeigten Position in die in Figur 2a gezeigte Ruhestellung erfolgen die anhand der Figur 2 beschriebenen Schritte in umgekehrter Reihenfolge.

Die Abschrägung der Hinterkante 14 und der Vorderkante 15 sind zueinander komplementär ausgestaltet. Bevorzugt weisen die Kanten einen in etwa identischen Winkel im Bereich von etwa 10° bis 20°, insbesondere von etwa 10°, auf.

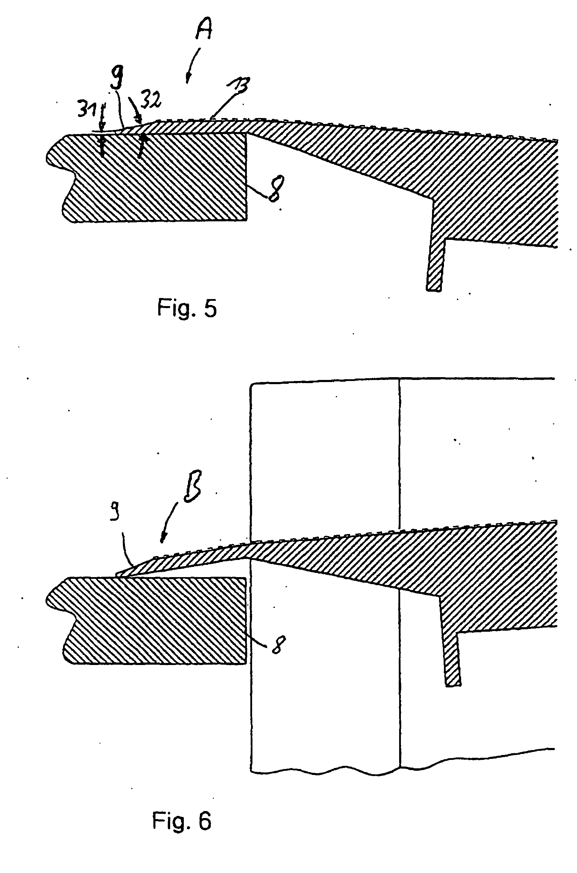

Der vordere Abschnitt einer Ladebrücke herkömmlicher Bauart ist in den Figuren 5 und 6 gezeigt. Dabei liegt das Auflageteil 9 direkt auf der Plattform 8 auf (Figur 5). Die Kante des Auflageteils 9 läuft flach aus. Der Winkel 32 der Abfasung kann etwa 20° betragen. An der Vorderkante muss das Auflageteil aus Festigkeitsgründen eine gewisse Stärke aufweisen. Dieses in Figur 5 mit 31 bezeichnete Maß muss nach bisherigen Erfahrungen mindestens 4mm betragen. Dadurch wird eine Stufe gebildet, die beim Überfahren zu spürbaren Erschütterungen führt, und zwar sowohl bei einem flachen Aufliegen des Auflageteils 9 auf der Plattform 8 in einer hohen Position A der Plattform 8 (Figur 5), als auch dann, wenn sich die Plattform 8 in einer niedrigen Position B (Figur 6) befindet und die Deckfläche 13 bzw. Deckplatte 10 im Winkel zu ihr steht.

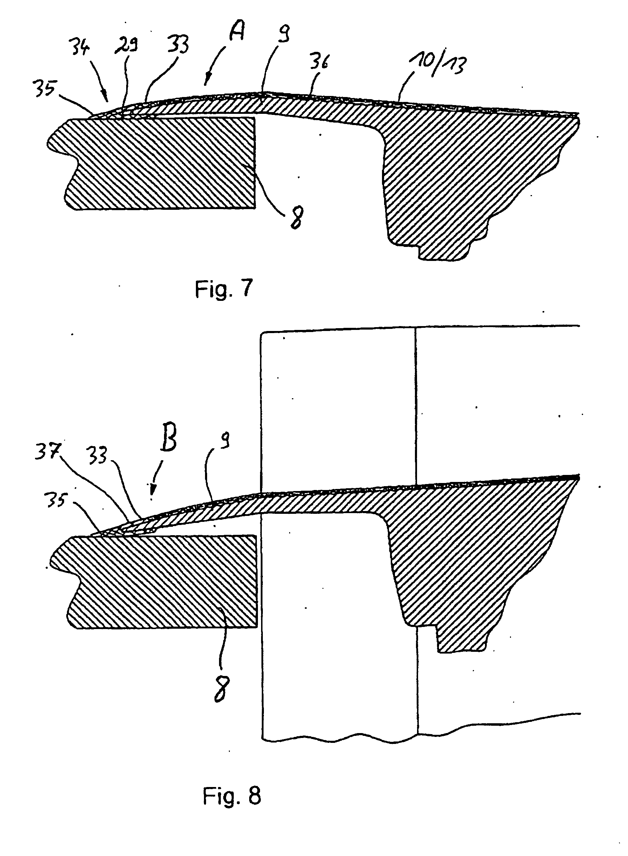

Gemäß einer bevorzugten Ausgestaltung der erfindungsgemäßen Ladebrücke, wie sie in den Figuren 7 und 8 in zwei verschiedenen Stellungen gezeigt ist, ist am freien Ende des Auflageteils 9 ein Belag 33 aus einem elastischen Material, z.B. PU, angebracht. Dieser Belag 33 wird durch ein Profil 34 gebildet, das an der Kante 29 befestigt ist und sich über die gesamte Breite der Deckplatte 10 bzw. der Deckfläche 13 erstreckt.

An dem Profil 34 ist eine Lippe 35 ausgebildet, die vor der Kante 29 verläuft und praktisch eine Fortsetzung des Auflageteils 9 bildet. Die nach oben weisende Fläche 37 des Profils 34 schließt unmittelbar an die Deckfläche 13 bzw. die Deckplatte 10 an, die gemeinsam eine Fahrbahn bilden. Das Profil 34 und die Fahrbahn bilden somit eine durchgehende Fläche. Die Fahrbahn kann ferner mit einer Anti-Dröhn-Beschichtung 36 versehen sein.

In den Figuren 7 und 8 ist zu erkennen, dass das Auflageteil 9 mit dem elastischen Belag 33 auf der Plattform 8 aufliegt. Stöße und Erschütterungen können somit gedämpft und kleine Unebenheiten ausgeglichen werden.

Die Lippe 35 kann an ihrem Ende eine Stärke von lediglich ca. 1 mm aufweisen, so dass eine nur noch sehr geringe Stufe vorhanden ist. Wenn sich die Plattform 8 und das Auflageteil 9 in einer niedrigen Position B befinden und im Winkel zueinander stehen, wird durch die elastische Lippe 35 ein sanfter Übergang hergestellt (Figur 8).

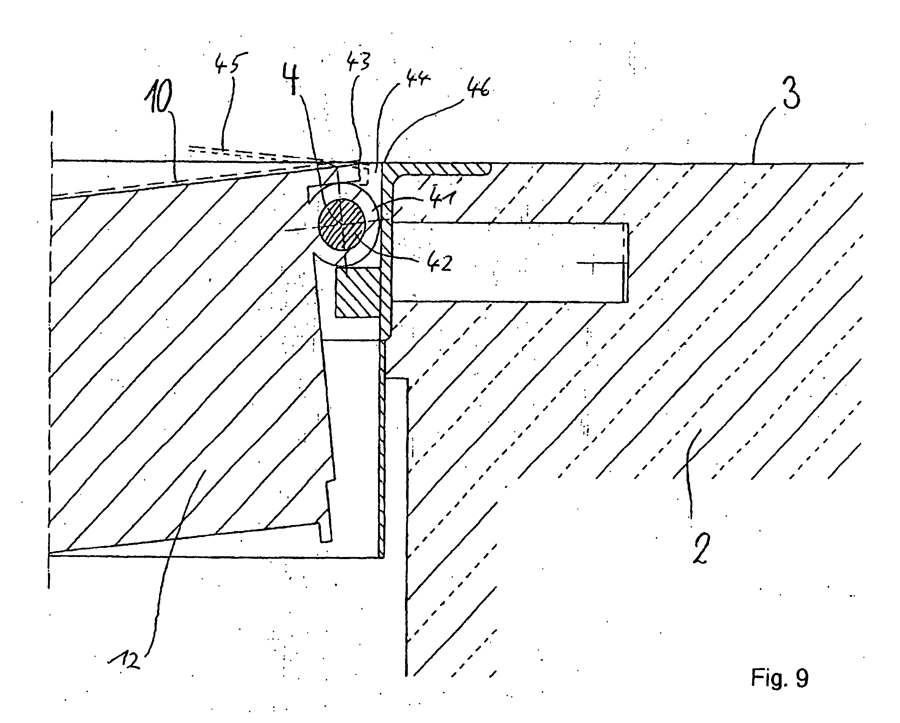

In Figur 9 ist für eine bekannte Ladebrücke die Gelenkstelle, an der die Ladebrücke mit der Rampe 2 verbunden ist, näher gezeigt. Dabei soll ein weiteres Problem verdeutlicht werden. Am oberen Rand des Plateaus 12 ist eine Lagerbuchse 41 befestigt, die einen Lagerbolzen oder eine Schwenkachse 42 aufnimmt, welche mit der Rampe 2 verbunden ist. Wenn das Plateau 12 abgesenkt ist, wie in Figur 9 dargestellt, erhebt sich eine hintere Kante 43 des Plateaus 12 bzw. ihre Deckplatte 10 noch über durch die Verkehrsfläche 3 der Rampe 2 bestimmte Ebene. Zudem entsteht ein breiter Spalt 44. Bei angehobenem Plateau 12, wie bei 45 in gestrichelter Darstellung angedeutet, verkleinert sich der Spalt 44 zwar, er wird jedoch auch tiefer, und eine Kante 46 am Rand der Verkehrsfläche 3 der Rampe 2 tritt hervor.

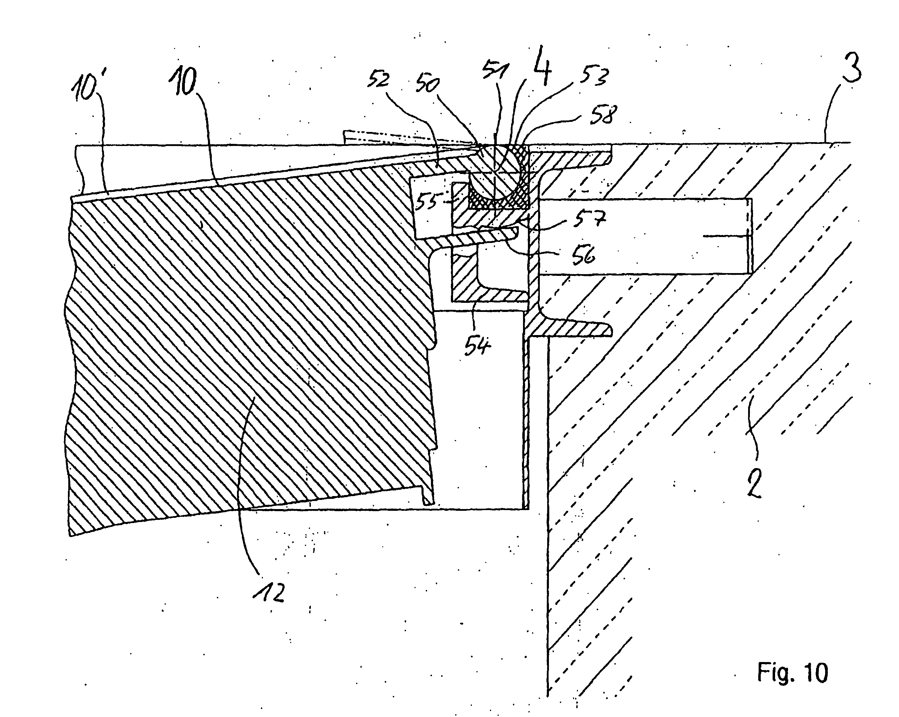

Bevorzugt ist deshalb gemäß einer weiteren Neuerung, wie in Figur 10 gezeigt, an dem Plateau 12 eine Schwenkachse 15 vorgesehen, die soweit oben angeordnet ist, dass sich ihr Zenit 51 auf gleicher Höhe wie die Deckplatte 10 befindet. Die durch die Deckplatte 10 bestimmte Ebene liegt somit tangential an der Schwenkachse 50 an, die einen kreisförmigen Querschnitt aufweist. Die Schwenkachse 50 erstreckt sich praktisch über die gesamte Breite des Plateaus 12. Sie ist über ihre gesamte Länge hinweg mit dem Vorsprung 52 des Plateaus 12 verbunden.

An der Rampe 2 ist eine Lagerschale 53 angeordnet, die die Schwenkachse 50 praktisch über ihre gesamte Länge hinweg aufnimmt. Wichtig ist, dass die Lagerschale 53 nicht den gesamten Umfang der Schwenkachse 50 umschließt, sondern lediglich einen Abschnitt des Umfangs, der größer ist als 180°, während ein kleinerer Abschnitt des Umfangs, der oben und auf der der Rampe abgewandten Seite gelegen ist und der größer ist als 90°, frei bleibt.

Die Lagerschale 53 besteht aus einem elastischen Material, z.B. einem Kunststoff. Sie kann daher auch als Schwingungsdämpfer wirken. Sie wird von Teilen der Rampe 2 gestützt sowie von einem Träger 54, der an der Rampe 2 angeordnet ist. Durch einen Vorsprung 55 am Träger 54 wird die Lagerschale 53 dagegen gesichert, von der Rampe 2 weggerissen zu werden.

An dem Plateau 12 ist ein Vorsprung 56 angeordnet. Dieser beaufschlagt von unten her einen Anschlag 57, der am Träger 54 ausgebildet ist. Auf diese Weise wird das Lager gegen nach oben wirkende Kräfte gesichert. Der Anschlag 57 ist in dem Bereich, wo er durch einen Vorsprung 56 beaufschlagt wird, nach außen gewölbt. Auf dieser Wölbung kann der Vorsprung 57 abrollen, wenn das Plateau 12 um die Achse 4 verschwenkt wird.

Die nach oben weisende Außenfläche 58 der Lagerschale 53 liegt frei. Sie ist eben und in derselben Ebene angeordnet wie die Verkehrsfläche 3 der Rampe 2. Sie ist nach oben hin um den Umfang der Schwenkachse 50 soweit in Richtung auf den Zenit 51 geführt, wie es bei einer aus Festigkeitsgründen erforderlichen Mindestwandstärke für die Lagerschale 53 möglich ist.

Aufgrund dieser Ausbildung der Gelenkstelle erhält man einen stetigen Übergang von der Verkehrsfläche 3 der Rampe 2 über die Außenfläche 58 der Lagerschale 53 und der frei liegenden Oberfläche der Schwenkachse 50 zur Deckplatte 10 des Plateaus 12.

Mit der erfindungsgemäßen Ladebrücke lassen sich Stufen und Spalten im Übergangsbereich von der Deckplatte des Plateaus zur Deckfläche des Vorschubs zumindest in einer Ladeposition wirksam und nahezu vollständig vermeiden. In Zwischenpositionen kann ebenfalls verladen werden, wobei eine Stufe im Übergangsbereich aufgrund der Abschrägung der Vorderkante der Deckplatte zumindest verringert wird. Weitere Ausgestaltungen verhindern Stufen an der Gelenkstelle bzw. am freien Ende des Auflageteils.

## Patentansprüche

1. Ladebrücke für Rampen (2) mit einem am rampenseitigen Ende um eine horizontale Achse (4) an der Rampe (2) schwenkbar lagerbaren Plateau (12) mit einer Deckplatte (10) und mit einem am freien Ende des Plateaus (12) angeordneten ausfahrbaren Vorschub (7) mit einer Deckfläche (13), dessen freies Ende (9) auf eine zu be- bzw. entladende Plattform (8) aufgelegt werden kann, wobei der Vorschub (7) in eingefahrenem Zustand wenigstens teilweise unter der Deckplatte (10) des Plateaus (12) angeordnet ist,
**dadurch gekennzeichnet, dass** Mittel (16, 17, 19, 20, 21, 22) vorgesehen sind zur Angleichung des Höhenniveaus der Deckfläche (13) des Vorschubs (7) und der Deckplatte (10) des Plateaus (12), wenn der Vorschub (7) in eine Endposition ausgefahren ist, und zum anschließenden Einfahren des Vorschubs (7) um eine vorbestimmte Strecke in eine Ladeposition und dass die dem Vorschub (7) zuweisende Vorderkante (15) der Deckplatte (10) des Plateaus (12) und die dem Plateau (12) zuweisende Hinterkante (14) der Deckfläche (13) des Vorschubs (7) zueinander komplementär abgeschrägt sind, so dass die Deckfläche (13) des Vorschubs (7) und die Deckplatte (10) des Plateaus (12) in der Ladeposition eine im wesentlichen stufenlose Ladefläche bilden.

2. Ladebrücke nach Anspruch 1,
**dadurch gekennzeichnet, dass** die Mittel (16, 17, 19, 20, 21, 22) ausgestaltet sind zur Anhebung des Vorschubs (7) in der Endposition des Vorschubs (7).

3. Ladebrücke nach Anspruch 1 oder 2,
**dadurch gekennzeichnet, dass** die Mittel (16, 17, 19, 20, 21, 22) ausgestaltet sind zur Absenkung des Plateaus (12) in der Endposition des Vorschubs (7).

4. Ladebrücke nach einem der vorstehenden Ansprüche,
**dadurch gekennzeichnet, dass** die Mittel (16, 17, 19, 20, 21, 22) hydraulische Mittel (21, 22), insbesondere einen Hub- und einen Vorschub-Hydraulikzylinder, aufweisen.

5. Ladebrücke nach einem der vorstehenden Ansprüche,
**dadurch gekennzeichnet, dass** die Mittel (16, 17, 19, 20, 21, 22) mechanische Mittel (16, 17, 19, 20), insbesondere Führungsrollen oder Führungsschienen, aufweisen.

6. Ladebrücke nach einem der vorstehenden Ansprüche,
**dadurch gekennzeichnet, dass** die Vorderkante (15) der Deckplatte (10) des Plateaus (12) und die Hinterkante (14) der Deckfläche (13) des Vorschubs (7) einen Winkel im Bereich von etwa 10° bis 20°, insbesondere von etwa 10°, aufweisen.

7. Ladebrücke nach einem der vorstehenden Ansprüche,
**dadurch gekennzeichnet, dass** die Kante (29) des freien Endes (9) einen Belag (33) aus einem elastischen Material aufweist.

8. Ladebrücke nach Anspruch 7,
**dadurch gekennzeichnet, dass** der elastische Belag (33) in eine Lippe (35) übergeht, die vor der Kante (29) des freien Endes (9) angeordnet ist.

9. Ladebrücke nach Anspruch 8,
**dadurch gekennzeichnet, dass** die nach oben weisende Fläche (37) des elastischen Belages (33), der Lippe (35) und der Deckplatte (10) eine durchgehende Fläche bilden.

10. Ladebrücke nach Anspruch 7,
**dadurch gekennzeichnet, dass** der elastische Belag (33) durch ein Profilelement (34) gebildet ist.

11. Ladebrücke nach Anspruch 7,
**dadurch gekennzeichnet, dass** der elastische Belag (33) aus einem zähelastischen Werkstoff, insbesondere aus Kunststoff, Gummi oder Polyurethan, besteht.

12. Ladebrücke nach Anspruch 8,
**dadurch gekennzeichnet, dass** die Lippe (35) des elastischen Belages (33) die Kante (29) des freien Endes (9) an ihrer der Plattform (8) zugewandten Unterseite hin umschließt.

13. Ladebrücke nach einem der vorstehenden Ansprüche,
**dadurch gekennzeichnet, dass** zur schwenkbaren Lagerung des Plateaus (12) an der Rampe (2) eine mit dem Plateau (12) verbundene Schwenkachse (50) vorgesehen ist, die in einer an der Rampe (2) angeordneten Lagerschale (53) gelagert ist, wobei die Lagerschale (53) nur einen Teil des Umfangs der Schwenkachse (50) umschließt in der Weise, dass die Schwenkachse (50) auf einem Umfangsabschnitt, der oben und auf der der Rampe (2) abgewandten Seite liegt, von der Lagerschale (3) frei ist, und wobei die Deckplatte (10) des Plateaus (12) in einer zu der Schwenkachse (50) tangentialen Ebene liegt.

14. Ladebrücke nach Anspruch 13,
**dadurch gekennzeichnet, dass** die Lagerschale (53) aus einem elastischen Werkstoff besteht.

15. Ladebrücke nach Anspruch 13,
**dadurch gekennzeichnet, dass** die Lagerschale (53) aus Kunststoff oder Gummi besteht.

16. Ladebrücke nach Anspruch 13,
**dadurch gekennzeichnet, dass** die obere Außenfläche (58) der Lagerschale (53) in der gleichen Ebene liegt wie die Verkehrsfläche (3) der Rampe (2).

17. Ladebrücke nach Anspruch 13,
**dadurch gekennzeichnet, dass** die Schwenkachse (30) an ihrer Längsseite mit dem Plateau (12) verbunden ist.

18. Ladebrücke nach Anspruch 13,
**dadurch gekennzeichnet, dass** die Lagerschale (33) durch einen an der Rampe (2) angeordneten Träger (54) auf ihrer Unterseite unterstützt wird, wobei an dem Träger (54) ein Vorsprung (55) angeordnet ist, der auf die der Rampe (2) abgewandten Seite der Lagerschale (53) geführt ist.

19. Ladebrücke nach Anspruch 13,
**dadurch gekennzeichnet, dass** an dem Plateau (12) ein in Richtung der Rampe (2) weisender Vorsprung (56) angeordnet ist, der an einem Anschlag (57) an der Rampe (2) anliegt, wobei sich der Anschlag (57) oberhalb des Vorsprungs (56) befindet.

20. Ladebrücke nach Anspruch 19,
**dadurch gekennzeichnet, dass** der Anschlag (57) in dem Bereich, wo er durch den Vorsprung (56) beaufschlagt wird, eine konvexe Wölbung aufweist.

## Claims

1. A loading ramp for loading docks (2), comprising a board (12) which is mountable at its end facing the loading dock so as to be pivotable about a horizontal axis (4) on the loading dock (2), a covering plate (10) and an extendable extension (7) which is arranged at the free end of the board (12) and provided with a covering surface (13) and the free end (9) of which can be laid on a platform (8) to be loaded or unloaded, wherein the extension (7) in its retracted state is at least partly arranged below the covering plate (10) of the board (12), **characterised in that** means (16, 17, 19, 20, 21, 22) are provided for matching the height of the covering surface (13) of the extension (7) to the height of the covering plate (10) of the board (12) when the extension (7) is extended into an end position, and for subsequently retracting the extension (7) over a predetermined distance into a loading position, and **in that** the front edge (15) - facing the extension (7) - of the covering plate (10) of the board (12) and the rear edge (14) - facing the board (12) - of the covering surface (13) of the extension (7) are chamfered in a manner complementary to one another so that the covering surface (13) of the extension (7) and the covering plate (10) of the board (12) form a substantially stepless loading surface in the loading position.

2. A loading ramp according to claim 1, **characterised in that** the means (16, 17, 19, 20, 21, 22) are formed for lifting the extension (7) when the extension (7) is in its end position.

3. A loading ramp according to claim 1 or 2, **characterised in that** the means (16, 17, 19, 20, 21, 22) are formed for lowering the board (12) when the extension (7) is in its end position.

4. A loading ramp according to any one of the preceding claims, **characterised in that** the means (16, 17, 19, 20, 21, 22) comprise hydraulic means (21, 22), in particular a hydraulic lifting cylinder and a hydraulic feed cylinder.

5. A loading ramp according to any one of the preceding claims, **characterised in that** the means (16, 17, 19, 20, 21, 22) comprise mechanical means (16, 17, 19, 20), in particular guide rollers or guide rails.

6. A loading ramp according to any one of the preceding claims, **characterised in that** the front edge (15) of the covering plate (10) of the board (12) and the rear edge (14) of the covering surface (13) of the extension (7) have an angle in the range of approximately 10° to 20°, in particular approximately 10°.

7. A loading ramp according to any one of the preceding claims, **characterised in that** the edge (29) of the free end (9) has a coating (33) comprising a resilient material.

8. A loading ramp according to claim 7, **characterised in that** the resilient coating (33) merges into a lip (35) arranged in front of the edge (29) of the free end (9).

9. A loading ramp according to claim 8, **characterised in that** the upward facing surface (37) of the resilient coating (33), the lip (35) and the covering plate (10) form a continuous surface.

10. A loading ramp according to claim 7, **characterised in that** the resilient coating (33) is formed by a profiled component (34).

11. A loading ramp according to claim 7, **characterised in that** the resilient coating (33) comprises a viscoelastic material, in particular plastics, rubber or polyurethane.

12. A loading ramp according to claim 5, **characterised in that** the lip (35) of the resilient coating (33) surrounds the edge (29) of the free end (9) on its underside facing the platform (8).

13. A loading ramp according to any one of the preceding claims, **characterised in that** a swivel pin (50) connected to the board (12) is provided for pivotably mounting the board (12) on the loading dock (2) and is mounted in a bearing shell (53) arranged on the loading dock (2), wherein the bearing shell (53) only surrounds part of the circumference of the swivel pin (50) so that the swivel pin (50) is free of the bearing shell (3) [*sic* - 53] over a circumferential portion lying at the top and on the side remote from the loading dock (2), and wherein the covering plate (10) of the board (12) lies in a plane disposed tangentially to the swivel pin (50).

14. A loading ramp according to claim 13, **characterised in that** the bearing shell (53) comprises a resilient material.

15. A loading ramp according to claim 13, **characterised in that** the bearing shell (53) comprises plastics or rubber.

16. A loading ramp according to claim 13, **characterised in that** the upper outer surface (58) of the bearing shell (53) lies in the same plane as the traffic surface (3) of the loading dock (2).

17. A loading ramp according to claim 13, **characterised in that** the swivel pin (30) [*sic* - 50] is connected on its longitudinal side to the board (12).

18. A loading ramp according to claim 13, **characterised in that** the bearing shell (33) [*sic* - 53] is supported on its underside by a carrier (54) arranged on the loading dock (2), wherein a projection (55) is arranged on the carrier (54) and extends onto the side of the bearing shell (53) remote from the loading dock (2).

19. A loading ramp according to claim 13, **characterised in that** a projection (56) extending towards the loading dock (2) is arranged on the board (12) and rests against a stop (57) on the loading dock (2), the stop (57) being located above the projection (56).

20. A loading ramp according to claim 19, **characterised in that** the stop (57) is convexly curved in the region in which it is acted upon by the projection (56).

## Revendications

1. Pont de chargement pour des rampes (2) comprenant un plateau (12) pouvant être logé sur l'extrémité côté rampe de façon à pouvoir basculer autour d'un axe (4) horizontal sur la rampe (2) avec une plaque de recouvrement (10) et avec un dispositif d'avancement (7) déployable et disposé sur l'extrémité libre du plateau (12) avec une surface de recouvrement (13), dont l'extrémité libre (9) peut être posée sur une plate-forme (8) à charger ou à décharger, le dispositif d'avancement (7) étant disposé dans l'état replié au moins partiellement sous la plaque de recouvrement (10) du plateau (12),
**caractérisé en que** des moyens (16, 17, 19, 20, 21, 22) sont prévus pour l'adaptation du niveau de hauteur de la surface de recouvrement (13) du dispositif d'avancement (7) et de la plaque de recouvrement (10) du plateau (12), lorsque le dispositif d'avancement est déployé dans une position finale, et pour la rentrée consécutive du dispositif d'avancement (7) d'un tronçon prédéfini dans une position de chargement et en ce que le bord avant (15), tourné vers le dispositif d'avancement (7), de la plaque de recouvrement (10) du plateau (12) et le bord arrière (14), tourné vers le plateau (12), de la surface de recouvrement (13) du dispositif d'avancement (7) sont chanfreinés de façon complémentaire l'un par rapport à l'autre, de sorte que la surface de recouvrement (13) du dispositif d'avancement (7) et la plaque de recouvrement (10) du plateau (12) forment une surface de chargement sensiblement progressive dans la position de chargement.

2. Pont de chargement selon la revendication 1,
**caractérisé en ce que** les moyens (16, 17, 19, 20, 21, 22) sont équipés pour le soulèvement du dispositif d'avancement (7) dans la position finale du dispositif d'avancement (7).

3. Pont de chargement selon la revendication 1 ou 2,
**caractérisé en ce que** les moyens (16, 17, 19, 20, 21, 22) sont conçus pour l'abaissement du plateau (12) dans la position finale du dispositif d'avancement (7).

4. Pont de chargement selon l'une quelconque des revendications précédentes,
**caractérisé en ce que** les moyens (16, 17, 19, 20, 21, 22) présentent des moyens hydrauliques (21, 22), en particulier un vérin hydraulique de levage et un vérin hydraulique d'avancement.

5. Pont de chargement selon l'une quelconque des revendications précédentes,
**caractérisé en ce que** les moyens (16, 17, 19, 20, 21, 22) présentent des moyens (16, 17, 19, 20) mécaniques, en particulier des galets de guidage ou des rails de guidage.

6. Pont de chargement selon l'une quelconque des revendications précédentes,
**caractérisé en ce que** le bord avant (15) de la plaque de recouvrement (10) du plateau (12) et le bord arrière (14) de la surface de chargement (13) du dispositif d'avancement (7) présentent un angle de l'ordre d'environ 10° à 20°, en particulier d'environ 10°.

7. Pont de chargement selon l'une quelconque des revendications précédentes,
**caractérisé en ce que** le bord (29) de l'extrémité (9) libre présente un revêtement (33) à base d'un matériau élastique.

8. Pont de chargement selon la revendication 7,
**caractérisé en ce que** le revêtement (33) élastique fait place à une lèvre (35), qui est disposée avant le bord (29) de l'extrémité (9) libre.

9. Pont de chargement selon la revendication 8,
**caractérisé en ce que** la surface (37), dirigée vers le haut, du revêtement (33) élastique, de la lèvre (35) de la plaque de recouvrement (10) forme une surface continue.

10. Pont de chargement selon la revendication 7,
**caractérisé en ce que** le revêtement (33) élastique est formé par un élément de profilé (34).

11. Pont de chargement selon la revendication 7,
**caractérisé en ce que** le revêtement (33) élastique est à base d'un matériau viscoplastique, en particulier à base de matière synthétique, de caoutchouc ou de polyuréthanne.

12. Pont de chargement selon la revendication 8,
**caractérisé en ce que** la lèvre (35) du revêtement (33) élastique entoure le bord (29) de l'extrémité (9) libre en direction de son côté inférieur tourné vers la plate-forme (8).

13. Pont de chargement selon l'une quelconque des revendications précédentes,
**caractérisé en ce que**, pour le logement basculant du plateau (12) sur la rampe (2), il est prévu un axe de basculement (50) relié au plateau (12) qui est logé dans une coque de palier (53) disposée sur la rampe (2), la coque de palier (53) entourant seulement une partie du pourtour de l'axe de basculement (50) en ce sens que l'axe de basculement (50) sur une partie périphérique, qui est située en haut et sur le côté opposé à la rampe (2), est débarrassé de la coque de palier (3), et la plaque de recouvrement (10) du plateau (12) se situant dans un plan tangentiel à l'axe de basculement (50).

14. Pont de chargement selon la revendication 13,
**caractérisé en ce que** la coque de palier (53) est à base d'un matériau élastique.

15. Pont de chargement selon la revendication 13,
**caractérisé en ce que** la coque de palier (53) est à base de matière synthétique ou de caoutchouc.

16. Pont de chargement selon la revendication 13,
**caractérisé en ce que** la surface extérieure (58) supérieure de la coque de palier (53) est située dans le même plan que la zone de circulation (3) de la rampe (2).

17. Pont de chargement selon la revendication 13,
**caractérisé en ce que** l'axe de basculement (30) est relié sur son côté longitudinal au plateau (12).

18. Pont de chargement selon la revendication 13,
**caractérisé en ce que** la coque de palier (33) est soutenue sur son côté inférieur par un support (54) disposé sur la rampe (2), une partie saillante (55) étant disposée sur le support (54), laquelle est guidée sur le côté, opposé à la rampe (2), de la coque de palier (53).

19. Pont de chargement selon la revendication 13,
**caractérisé en ce que** sur le plateau (12) est disposée une partie saillante (56) dirigée en direction de la rampe (2), qui s'appuie sur une butée (57) sur la rampe (2), la butée (57) se trouvant au-dessus de la partie saillante (56).

20. Pont de chargement selon la revendication 19,
**caractérisé en ce que** la butée (57) présente une courbure convexe dans la zone où elle est sollicitée par la partie saillante (56).
